# EUROPÄISCHE PATENTSCHRIFT

(11) **EP 2 808 527 B1**
(45) Veröffentlichungstag und Bekanntmachung des Hinweises auf die Patenterteilung: **10.03.2021**
(21) Anmeldenummer: 14000133.0
(22) Anmeldetag: 15.01.2014
(51) Int. Cl.: F02G 1/043, F02G 5/02, F01K 23/06, F28D 15/00

(54) **VERFAHREN UND VORRICHTUNG ZUM BETREIBEN EINER BRENNKRAFTMASCHINE**
METHOD AND DEVICE FOR OPERATING A COMBUSTION ENGINE
PROCÉDÉ ET DISPOSITIF DESTINÉS AU FONCTIONNEMENT D'UN MOTEUR À COMBUSTION INTERNE

(30) Priorität: 31.05.2013 DE 102013009219
(43) Veröffentlichungstag der Anmeldung: 03.12.2014
(73) Patentinhaber: MAN Truck & Bus SE, 80995 München (DE)
(72) Erfinder: Schydlo, Alexander, 81243 München (DE)
(74) Vertreter: Liebl, Thomas

(56) Entgegenhaltungen:
- DE-A1-102007 054 197
- DE-U1-202008 000 832
- GB-A- 2 474 021
- US-A- 4 235 077
- US-A- 4 481 771
- US-A1- 2002 017 098
- US-A1- 2004 221 577
- US-A1- 2010 043 427
- US-A1- 2012 031 079
- US-B1- 7 076 941

## Beschreibung

Die vorliegende Erfindung betrifft ein Verfahren zum Betreiben einer Brennkraftmaschine, eine Vorrichtung zur Durchführung des Verfahrens und eine verfahrensgemäße Brennkraftmaschine.

Brennkraftmaschinen, insbesondere in Kraftfahrzeugen oder Nutzkraftfahrzeugen, sind häufig aus Wirkungsgradgründen als Dieselmotoren konzipiert und weisen zur Erfüllung von Umweltauflagen Abgasnachbehandlungseinrichtungen wie SCR Katalysatoren und/oder Abgasrückführeinrichtungen auf. Dabei kann die im Abgas der Brennkraftmaschine enthaltene Abgasenthalpie nicht optimal genutzt werden. Hohe Abgasrückführraten belasten zudem den Kühlkreislauf der Brennkraftmaschine der zumeist flüssigkeitsgekühlten Brennkraftmaschinen durch die notwendige Rückkühlung der Abgase über entsprechende Abgaskühler, gegebenenfalls in Verbindung mit zusätzlichen Niedertemperaturkreisläufen.

Aus der US 2002/0017098 A1 ist ein Verfahren zum Betreiben einer Brennkraftmaschine mit einem nachgeschalteten Abgassystem und einem Stirlingmotor bekannt.

Die GB 2 474 021 A beschreibt eine Energie-Erzeugungseinrichtung für ein Gebäude, bei der eine Brennkraftmaschine verwendet wird.

Die US 2004/0221577 A1 offenbart ein Verfahren zum Betreiben einer Brennkraftmaschine mit einem nachgeschaltetem Abgassystem.

Aufgabe der Erfindung ist es, ein Verfahren und eine Vorrichtung zur Durchführung des Verfahrens sowie eine verfahrensgemäße Brennkraftmaschine, insbesondere für Nutzkraftfahrzeuge anzugeben, deren Wirkungsgrad durch verbesserte Ausnutzung der Abgasenthalpie angehoben ist.

Die Lösung dieser Aufgabe gelingt mit den Merkmalen der unabhängigen Patentansprüche. Vorteilhafte Weiterbildungen und Ausgestaltungen sind Gegenstand der Unteransprüche. Erfindungsgemäß wird vorgeschlagen, dass die Abgasenthalpie im Abgasstrom der Brennkraftmaschine zum Betreiben einer Wärmekraftmaschine, in Form eines Stirlingmotors, genutzt wird, die mechanische Energie erzeugt.

Damit können im Wesentlichen zwei Vorteile erzielt werden, nämlich einerseits eine Nutzung der im Abgas enthaltenen Abwärme und andererseits stromab der Entnahmestelle der Wärme eine Absenkung der Abgastemperaturen, die gegebenenfalls den Wärmehaushalt der Brennkraftmaschine verbessern kann, so dass beispielsweise auf einen Niedertemperaturkreislauf verzichtet werden könnte.

Erfindungsgemäß wird ein Stirlingmotor (auch als Heißgasmotor bezeichnet) als Wärmekraftmaschine verwendet, der an sich bekannter Bauart mit einem geschlossenem Kreislauf sein kann und der die Wärme in mechanische Energie umwandelt.

Der Stirlingmotor kann zum Antrieb einer elektrischen Maschine (bevorzugt einem Generator) verwendet werden, was nicht von der Erfindung umfasst ist, und demzufolge Strom erzeugen; gegebenenfalls kann die Maschine aber auch als Starter geschaltet werden.

Der Stirlingmotor kann mit seiner Antriebswelle mit der Kurbelwelle der Brennkraftmaschine gekoppelt werden und somit insbesondere im Teillast- und/oder Vollastbetrieb der Brennkraftmaschine ein überlagertes Antriebsmoment einsteuern. Mittels eines Drehzahlreglers kann dabei die Drehzahl der Antriebswelle des Stirlingmotors an die Momentandrehzahl der Kurbelwelle der Brennkraftmaschine wirkungsgradoptimiert angepasst werden.

Bevorzugt wird die Abgasenthalpie im Abgasstrom der Brennkraftmaschine als Antriebwärmestrom Qzu an den Stirlingmotor entweder mittelbar, insbesondere unter Zwischenschaltung wenigstens eines Zwischenwärmeübertragers, oder aber unmittelbar übertragen. Erfindungsgemäß ist in eine Abgasleitung des Abgassystems der Brennkraftmaschine wenigstens ein Wärmerohr, vorzugsweise mehrere Wärmerohre (nachfolgend wird aus Gründen der Übersichtlichkeit beispielhaft stets die Mehrzahl "Wärmerohre" verwendet), eingesetzt, das den Stirlingmotor, vorzugsweise einen dem Arbeitskolben des Stirlingmotors zugeordneten Wärmeübertrager bzw. Wärmeübertragungsbereich, mittelbar, insbesondere unter Zwischenschaltung wenigstens eines Zwischenwärmeübertragers, oder unmittelbar mit dem Antriebwärmestrom Qzu und damit mit Antriebsenergie beaufschlagt. Dies ermöglicht einen baulich gut adaptierbaren und effizienten Wärmetransport zum Stirlingmotor. In einer nicht von der Erfindung umfassten Alternative kann eine Abgasleitung abgezweigt sein, deren Wärmestrom den Stirlingmotor bzw. einen Wärmeübertrager bzw. Wärmeübertragungsbereich des Stirlingmotors durchströmt.

Erfindungsgemäß sind bei einer Brennkraftmaschine mit Abgasrückführeinrichtung die Wärmerohre stromauf der Abzweigstelle des Abgases für die Abgasrückführeinrichtung angeordnet, so dass durch die damit verbundene Temperaturabsenkung des Abgases eine geringere Abgaskühlung erforderlich ist, die sogar den Entfall eines Abgaskühlers in der Rückführleitung ermöglicht.

Erfindungsgemäß sind die Wärmerohre bei einer katalytischen Abgasnachbehandlungseinrichtung im Abgassystem der Brennkraftmaschine stromauf der Nachbehandlungseinrichtung vorgesehen, insbesondere um somit bei Bedarf eine höhere Antriebsenergie bzw. einen höheren Antriebwärmestrom zum Stirlingmotor ableiten zu können. Gegebenenfalls könnte auch eine Temperatursteuerung des Abgases (zum Beispiel durch Bypassleitungen) im Abgassystem vorgesehen werden, um zum Beispiel bei niedrigen Abgastemperaturen (Kaltstart) die Wärmerohre zu umgehen und bevorzugt die Nachbehandlungseinrichtung zu beaufschlagen.

Die erfindungsgemäße Vorrichtung zur Durchführung des Verfahrens an einer Brennkraftmaschine mit einer Kraftstoff-Luft-Zuführeinrichtung und einem nachgeschaltetem Abgassystem besteht darin, dass das Abgassystem über wenigstens ein Wärmerohr, insbesondere über mehrere darin integrierte Wärmerohre, wärmeübertragend an eine Wärmekraftmaschine, also an den Stirlingmotor, angekoppelt ist, die bzw. der mechanische Energie erzeugt. Der Stirlingmotor kann dabei mit seiner Antriebswelle mit der Kurbelwelle der Brennkraftmaschine kuppelbar sein.

Erfindungsgemäß ist die Wärmesenke des Stirlingmotors durch Fahrtwind des Kraftfahrzeugs gekühlt.

In einer weiteren Ausgestaltung der Erfindung können bei einer Brennkraftmaschine mit Abgasnachbehandlungseinrichtung und/oder Abgasrückführeinrichtung die Wärmerohre für den Stirlingmotor in einem Abgasgehäuse des Abgassystems integriert sein, das stromauf der Abgasnachbehandlungseinrichtung und/oder der Abgasrückführableitung positioniert ist. Die Abgasnachbehandlungseinrichtung kann dabei durch einen SCR Katalysator gebildet sein.

Schließlich wird bevorzugt eine Brennkraftmaschine, insbesondere für Nutzkraftfahrzeuge, mit den vorstehend aufgeführten Merkmalen sowie ein Fahrzeug, insbesondere ein Nutzfahrzeug, vorgeschlagen.

Ein Ausführungsbeispiel der Erfindung ist im Folgenden anhand der beigefügten, grob schematischen Zeichnung näher erläutert.

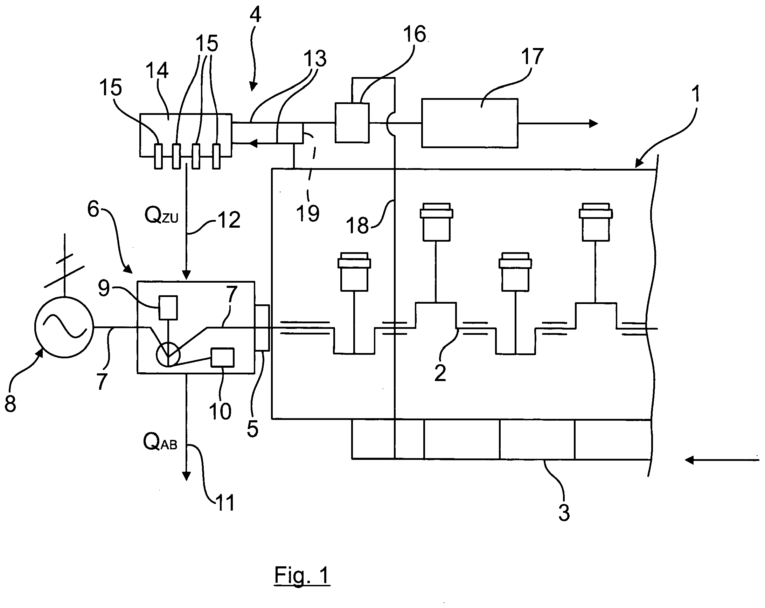

In der einem Blockschaltbild entsprechenden Fig. 1 ist mit dem Bezugszeichen 1 eine mehrzylindrische Hubkolben-Brennkraftmaschine bzw. ein Dieselmotor für ein Nutzkraftfahrzeug bezeichnet, die soweit nicht beschrieben herkömmlicher Bauart sein kann und deren Kurbelwelle 2 auf die übrigen Antriebseinrichtungen des Kraftfahrzeugs abtreibt.

Die Brennkraftmaschine 1 weist eine nur angedeutete Kraftstoff-Luft-Zuführeinrichtung mit einem Ansaugverteiler 3 und ein die Abgase abführendes Abgassystem 4 soweit nicht beschrieben bekannter Bauart auf. Gegebenenfalls könnte auch eine Abgasturboaufladung mit zumindest einer Abgasturbine im Abgassystem 4 vorgesehen sein.

An die Brennkraftmaschine 1 bzw. an deren Kurbelwelle 2 ist zum Beispiel über eine schaltbare Kupplung und einen Drehzahlregler 5 ein Stirlingmotor 6 angekoppelt, dessen Antriebswelle 7 einerseits trieblich mit der Kurbelwelle 2 verbunden ist und andererseits - was nicht von der Erfindung umfasst ist - auf eine elektrische Maschine 8, zum Beispiel einem Drehstromgenerator, abtreibt.

Der Stirlingmotor 6 ist im Ausführungsbeispiel beispielhaft als Alpha-Typ ausgelegt, mit einem Arbeitskolben 9 und einem Verdrängerkolben 10, deren 90 Grad zueinander versetzte Zylinder (nicht dargestellt) in bekannter Weise in einem mehr oder minder geschlossenem Gaskreislauf miteinander korrespondieren, wobei in bekannter Weise der Zylinder des Verdrängerkolbens 10 als Wärmesenke (Q_{AB}) ausgeführt gekühlt ist (nur mit dem Pfeil 11 angedeutet), während der Zylinder des Arbeitskolben 9 durch Wärmezufuhr (Qzu) beheizt ist. Der Stirlingmotor 6 könnte aber auch in bekannter Weise als Beta-Typ mit koaxialen Zylindern oder als Gamma-Typ ausgeführt sein.

Die Kühlung Q_{AB} erfolgt durch Fahrtwind durch Anordnung von Kühlrippen an dem Zylinder des Verdrängerkolbens 10.

Zur Beheizung des Zylinders des Arbeitskolbens 9 des Stirlingmotors 6 (Pfeil 12) sind in das Abgassystem 4 bzw. in eine von den Brennräumen der Brennkraftmaschine 1 abgehende Abgasleitung 13 in einem Abgasgehäuse 14 mehrere Wärmerohre 15 eingesetzt, die die Abgasenthalpie bzw. Abwärme des Abgases zu dem Stirlingmotor 6 entweder direkt oder indirekt, zum Beispiel mittels eines Zwischenwärmeübertragers, transportieren.

Stromab des Abgasgehäuses 14 mit den Wärmerohren 15 sind in dem Abgassystem 4 eine Ableitstelle bzw. ein Abgasrückführventil 16 einer nicht weiter dargestellten Abgasrückführeinrichtung der Brennkraftmaschine 1 und in Strömungsrichtung danach eine Abgasnachbehandlungseinrichtung mit einem SCR Katalysator 17 (selektive katalytische Reduktion) angeordnet.

Über das Abgasrückführventil 16 und eine Abgasrückführleitung 18 kann Abgas in definierten Raten zum Ansaugverteiler 3 der Brennkraftmaschine 1 rückgeführt werden. Gegebenenfalls kann in der Abgasrückführleitung 18 ein an das Flüssigkeitskühlsystem der Brennkraftmaschine 1 angeschlossener Abgaskühler vorgesehen sein.

Über den Stirlingmotor 6 kann bei Anordnung entsprechender Kupplungen (nicht dargestellt) an der Antriebswelle 7 entweder die durch die Wärmekopplung erzeugte Antriebsenergie auf die Kurbelwelle 2 und/oder - was nicht von der Erfindung umfasst ist - auf die elektrische Maschine 8 zur Stromerzeugung in das Bordnetz des Kraftfahrzeugs geleitet werden. Die Maschine 8 kann gegebenenfalls auch als Elektromotor geschaltet als Startermotor dienen oder in einem Boostbetrieb zusätzliche Antriebsenergie liefern.

In dem Abgassystem 4 bzw. in der Abgasleitung 13 sind Mittel wie zum Beispiel eine steuerbare Bypassleitung 19 (gestrichelt angedeutet) vorgesehen, die eine Umgehung der Wärmerohre 15 bewirken. Damit kann zum Beispiel bei einem Kaltstart der Brennkraftmaschine 1 vorrangig eine Temperaturanhebung zum SCR Katalysator 17 erzielt werden.

### Bezugszeichenliste

- 1: Brennkraftmaschine
- 2: Kurbelwelle
- 3: Ansaugverteiler
- 4: Abgassystem
- 5: Drehzahlregler
- 6: Stirlingmotor
- 7: Antriebswelle
- 8: Elektromaschine
- 9: Arbeitskolben
- 10: Verdrängerkolben
- 11: Wärmeabfuhr Q_{AB} (Wärmesenke des Stirlingmotors)
- 12: Wärmezufuhr Qzu (Wärmequelle des Stirlingmotors)
- 13: Abgasleitung
- 14: Abgasgehäuse
- 15: Wärmerohre
- 16: Abgasrückführventil
- 17: SCR Katalysator
- 18: Abgasrückführleitung
- 19: Bypassleitung

## Patentansprüche

1. Verfahren zum Betreiben einer Brennkraftmaschine für Nutzkraftfahrzeuge mit einer Kraftstoff-Luft-Zuführeinrichtung, einem nachgeschalteten Abgassystem und einer katalytischen Abgasnachbehandlungseinrichtung (17),
wobei die Abgasenthalpie im Abgasstrom der Brennkraftmaschine (1) zum Betreiben einer Wärmekraftmaschine (6) genutzt wird,
wobei die Wärmekraftmaschine (6) mechanische Energie erzeugt,
wobei die Wärmekraftmaschine (6) ein Stirlingmotor mit einem Arbeitskolben (9) und einem Verdrängerkolben (10) ist, in denen Zylinder angeordnet sind, und
wobei die Abgasenthalpie im Abgasstrom der Brennkraftmaschine (1) als Antriebwärmestrom (Qzu) zu der Wärmekraftmaschine (6) übertragen wird,
wobei in eine Abgasleitung (13) des Abgassystems (4) der Brennkraftmaschine (1) wenigstens ein Wärmeübertrager (15) eingesetzt ist, der die Wärmekraftmaschine (6) mit dem Antriebwärmestrom (Qzu) beaufschlagt,
wobei der wenigstens eine Wärmeübertrager (15) stromauf der Abgasnachbehandlungseinrichtung (17) vorgesehen wird, und
wobei Mittel (19) zum Umgehen des wenigstens einen im Abgassystem (4) angeordneten Wärmeübertragers (15) verwendet werden,
**dadurch gekennzeichnet,**
**dass** der wenigstens eine Wärmeübertrager (15) stromauf einer Abzweigstelle (16) für eine Abgasrückführeinrichtung der Brennkraftmaschine (1) angeordnet wird,
**dass** der wenigstens eine Wärmeübertrager (15) ein Wärmerohr ist, und
**dass** der Zylinder des Verdrängerkolbens (10) als Wärmesenke (Q_{AB}) durch Fahrtwind des Kraftfahrzeugs gekühlt wird, wobei Kühlrippen am Zylinder des Verdrängerkolbens (10) angeordnet sind.

2. Verfahren nach Anspruch 1, **dadurch gekennzeichnet, dass** die Abgasenthalpie im Abgasstrom der Brennkraftmaschine (1) als Antriebwärmestrom (Qzu) mittelbar, insbesondere unter Zwischenschaltung wenigstens eines Zwischenwärmeüberträgers, oder unmittelbar zu der Wärmekraftmaschine (6) übertragen wird.

3. Vorrichtung für eine Brennkraftmaschine zur Durchführung des Verfahrens nach einem der vorhergehenden Ansprüche, mit einer Kraftstoff-Luft-Zuführeinrichtung (3), einem nachgeschaltetem Abgassystem (4), einer Wärmekraftmaschine (6), die mechanische Energie erzeugt, und einer katalytischen Abgasnachbehandlungseinrichtung (17),
wobei das Abgassystem (4) über wenigstens einen Wärmeübertrager (15) wärmeübertragend an die Wärmekraftmaschine (6) angekoppelt ist,
wobei die Wärmekraftmaschine (6) ein Stirlingmotor mit einem Arbeitskolben (9) und einem Verdrängerkolben (10) ist, in denen Zylinder angeordnet sind,
wobei der wenigstens eine Wärmeübertrager (15) stromauf der Abgasnachbehandlungseinrichtung (17) vorgesehen ist, und
wobei Mittel (19) zum Umgehen des wenigstens einen im Abgassystem (4) angeordneten Wärmeübertragers (15) verwendet sind,
**dadurch gekennzeichnet,**
**dass** der wenigstens eine Wärmeübertrager (15) stromauf einer Abzweigstelle (16) für eine Abgasrückführeinrichtung der Brennkraftmaschine (1) angeordnet ist,
**dass** der wenigstens eine Wärmeübertrager (15) ein Wärmerohr ist, und
**dass** der Zylinder des Verdrängerkolbens (10) als Wärmesenke (Q_{AB}) durch Fahrtwind des Kraftfahrzeugs gekühlt wird, wobei Kühlrippen am Zylinder des Verdrängerkolbens (10) angeordnet sind.

4. Vorrichtung nach Anspruch 3, **dadurch gekennzeichnet, dass** das wenigstens eine Wärmerohr (15) einen Antriebwärmestrom an einen dem Arbeitskolben (9) des Stirlingmotors (6) zugeordneten Wärmeübertrager bzw. Wärmeübertragungsbereich, mittelbar, insbesondere unter Zwischenschaltung wenigstens eines Zwischenwärmeübertragers, oder unmittelbar überträgt.

5. Vorrichtung nach Anspruch 3 oder 4, **dadurch gekennzeichnet, dass** die Wärmekraftmaschine (6) mit ihrer Antriebswelle (7) mit der Kurbelwelle (2) der Brennkraftmaschine (1) kuppelbar ist.

6. Vorrichtung nach einem der Ansprüche 3 bis 5, **dadurch gekennzeichnet, dass** bei einer Brennkraftmaschine (1) mit der Abgasnachbehandlungseinrichtung (17) und der Abgasrückführeinrichtung das wenigstens eine Wärmerohr (15) für die Wärmekraftmaschine (6) in ein Abgasgehäuse (14) des Abgassystems (4) integriert ist, das stromauf der Abgasnachbehandlungseinrichtung (17) und einer Abgasrückführableitung (18) positioniert ist.

7. Brennkraftmaschine (1), insbesondere für Nutzkraftfahrzeuge, mit einer Vorrichtung nach einem der Ansprüche 3 bis 6.

8. Fahrzeug, insbesondere Nutzfahrzeug, mit einer Vorrichtung nach einem der Ansprüche 3 bis 6.

## Claims

1. Method for operating an internal combustion engine for utility motor vehicles, having a fuel-air feed device, having a downstream exhaust-gas system, and having a catalytic exhaust-gas aftertreatment device (17),
wherein the exhaust-gas enthalpy in the exhaust-gas flow of the internal combustion engine (1) is utilized for operating a heat engine (6),
wherein the heat engine (6) generates mechanical energy,
wherein the heat engine (6) is a Stirling motor with a working piston (9) and with a displacement piston (10), in which cylinders are arranged, and
wherein the exhaust-gas enthalpy in the exhaust-gas flow of the internal combustion engine (1) is transferred as a driving heat flow (Qzu) to the heat engine (6), wherein, into at least one exhaust-gas line (13) of the exhaust-gas system (4) of the internal combustion engine (1), there is incorporated at least one heat exchanger (15) which applies the driving heat flow (Qzu) to the heat engine (6),
wherein the at least one heat exchanger (15) is provided upstream of the exhaust-gas aftertreatment device (17), and
wherein means (19) are used for bypassing the at least one heat exchanger (15) arranged in the exhaust-gas system (4),
**characterized**
**in that** the at least one heat exchanger (15) is arranged upstream of a branching point (16) for an exhaust-gas recirculation device of the internal combustion engine (1),
**in that** the at least one heat exchanger (15) is a heatpipe, and
**in that** the cylinder of the displacement piston (10), as a heat sink (Q_{AB}), is cooled by relative wind of the motor vehicle, wherein cooling fins are arranged on the cylinder of the displacement piston (10).

2. Method according to Claim 1, **characterized in that** the exhaust-gas enthalpy in the exhaust-gas flow of the internal combustion engine (1) is transferred as a driving heat flow (Qzu) to the heat engine (6) indirectly, in particular via at least one intermediate heat exchanger, or directly.

3. Device for an internal combustion engine for carrying out the method according to either of the preceding claims, having a fuel-air feed device (3), having a downstream exhaust-gas system (4), having a heat engine (6) which generates mechanical energy, and having a catalytic exhaust-gas aftertreatment device (17),
wherein the exhaust-gas system (4) is coupled in heat-exchanging fashion via at least one heat exchanger (15) to the heat engine (6),
wherein the heat engine (6) is a Stirling motor with a working piston (9) and with a displacement piston (10), in which cylinders are arranged,
wherein the at least one heat exchanger (15) is provided upstream of the exhaust-gas aftertreatment device (17), and
wherein means (19) are used for bypassing the at least one heat exchanger (15) arranged in the exhaust-gas system (4),
**characterized**
**in that** the at least one heat exchanger (15) is arranged upstream of a branching point (16) for an exhaust-gas recirculation device of the internal combustion engine (1),
**in that** the at least one heat exchanger (15) is a heatpipe, and
**in that** the cylinder of the displacement piston (10), as a heat sink (Q_{AB}), is cooled by relative wind of the motor vehicle, wherein cooling fins are arranged on the cylinder of the displacement piston (10).

4. Device according to Claim 3, **characterized in that** the at least one heatpipe (15) transfers a driving heat flow to a heat exchanger or heat exchanger region, which is assigned to the working piston (9) of the Stirling motor (6), indirectly, in particular via at least one intermediate heat exchanger, or directly.

5. Device according to Claim 3 or 4, **characterized in that** the heat engine (6) is couplable by means of its drive shaft (7) to the crankshaft (2) of the internal combustion engine (1).

6. Device according to any of Claims 3 to 5, **characterized in that**, in the case of an internal combustion engine (1) with the exhaust-gas aftertreatment device (17) and with the exhaust-gas recirculation device, the at least one heatpipe (15) for the heat engine (6) is integrated into an exhaust-gas housing (14) of the exhaust-gas system (4), which exhaust-gas housing is positioned upstream of the exhaust-gas aftertreatment device (17) and of an exhaust-gas recirculation discharge line (18).

7. Internal combustion engine (1), in particular for utility motor vehicles, having a device according to any of Claims 3 to 6.

8. Vehicle, in particular utility vehicle, having a device according to any of Claims 3 to 6.

## Revendications

1. Procédé pour faire fonctionner un moteur à combustion interne pour des véhicules utilitaires comprenant un dispositif d'amenée de carburant-air, un système d'échappement monté en aval et un dispositif de post-traitement des gaz d'échappement (17) catalytique,
l'enthalpie des gaz d'échappement dans le flux de gaz d'échappement du moteur à combustion interne (1) étant utilisée pour faire fonctionner un moteur thermique (6),
le moteur thermique (6) générant de l'énergie mécanique,
le moteur thermique (6) étant un moteur Stirling, pourvu d'un piston de travail (9) et d'un piston déplaceur (10), dans lequel sont disposés des cylindres, et
l'enthalpie des gaz d'échappement dans le flux de gaz d'échappement du moteur à combustion interne (1) étant transmise au moteur thermique (6) en tant que courant thermique d'entraînement (Qzu),
au moins un échangeur de chaleur (15) étant utilisé dans une conduite d'échappement (13) du système d'échappement (4) du moteur à combustion interne (1), lequel alimente le moteur thermique (6) avec le courant thermique d'entraînement (Qzu),
l'au moins un échangeur de chaleur (15) se trouvant en amont du dispositif de post-traitement des gaz d'échappement (17) et
des moyens (19) de contournement de l'au moins un échangeur de chaleur (15) disposé dans le système d'échappement (4) étant utilisés
**caractérisé en ce**
**que** l'au moins un échangeur de chaleur (15) est disposé en amont d'un point de bifurcation (16) pour un dispositif de recirculation des gaz d'échappement du moteur à combustion interne (1),
en ce que l'au moins un échangeur de chaleur (15) est un caloduc, et
en ce que le cylindre du piston déplaceur (10), en tant que dissipateur thermique (Q_{AB}), est refroidi par le vent de déplacement du véhicule automobile, des ailettes de refroidissement étant disposées sur le cylindre du piston déplaceur (10).

2. Procédé selon la revendication 1, **caractérisé en ce que** l'enthalpie des gaz d'échappement dans le flux de gaz d'échappement du moteur à combustion interne (1) est transmise en tant que courant thermique d'entraînement (Qzu) indirectement, notamment en intercalant au moins un échangeur de chaleur intermédiaire, ou directement au moteur thermique (6).

3. Arrangement pour un moteur à combustion interne destiné à mettre en oeuvre le procédé selon l'une des revendications précédentes, comprenant un dispositif d'amenée de carburant-air (3), un système d'échappement (4) monté en aval, un moteur thermique (6) et un dispositif de post-traitement des gaz d'échappement (17) catalytique,
le système d'échappement (4) étant couplé avec transmission de chaleur au moteur thermique (6) par le biais d'au moins un échangeur de chaleur (15),
le moteur thermique (6) étant un moteur Stirling, pourvu d'un piston de travail (9) et d'un piston déplaceur (10), dans lequel sont disposés des cylindres,
l'au moins un échangeur de chaleur (15) se trouvant en amont du dispositif de post-traitement des gaz d'échappement (17), et
des moyens (19) de contournement de l'au moins un échangeur de chaleur (15) disposé dans le système d'échappement (4) étant utilisés,
**caractérisé en ce**
**que** l'au moins un échangeur de chaleur (15) est disposé en amont d'un point de bifurcation (16) pour un dispositif de recirculation des gaz d'échappement du moteur à combustion interne (1),
en ce que l'au moins un échangeur de chaleur (15) est un caloduc, et
en ce que le cylindre du piston déplaceur (10), en tant que dissipateur thermique (Q_{AB}), est refroidi par le vent de déplacement du véhicule automobile, des ailettes de refroidissement étant disposées sur le cylindre du piston déplaceur (10).

4. Arrangement selon la revendication 3, **caractérisé en ce qu'**au moins un caloduc (15) transmet indirectement, notamment en intercalant au moins un échangeur de chaleur intermédiaire, ou directement un courant thermique d'entraînement à un échangeur de chaleur ou une zone de transmission de chaleur associé(e) à l'un des pistons de travail (9) du moteur Stirling (6).

5. Arrangement selon la revendication 3 ou 4, **caractérisé en ce que** le moteur thermique (6) peut être accouplé par son arbre d'entraînement (7) au vilebrequin (2) du moteur à combustion interne (1).

6. Arrangement selon l'une des revendications 3 à 5, **caractérisé en ce que** dans le cas d'un moteur à combustion interne (1) comprenant le dispositif de post-traitement des gaz d'échappement (17) et le dispositif de recirculation des gaz d'échappement, l'au moins un caloduc (15) pour le moteur thermique (6) est intégré dans un boîtier d'échappement (14) du système d'échappement (4), lequel est positionné en amont du dispositif de post-traitement des gaz d'échappement (17) et d'une conduite de retour des gaz d'échappement (18).

7. Moteur à combustion interne (1), notamment pour des véhicules utilitaires, comprenant un arrangement selon l'une des revendications 3 à 6.

8. Véhicule, notamment véhicule utilitaire, comprenant un arrangement selon l'une des revendications 3 à 6.
